# EUROPÄISCHE PATENTANMELDUNG

(11) **EP 1 138 636 A2**
(43) Veröffentlichungstag der Anmeldung: **04.10.2001**
(21) Anmeldenummer: 01102553.3
(22) Anmeldetag: 06.02.2001
(51) Int. Cl.: C02F 1/48

(54) **Verfahren zur Behandlung von Leitungswasser und Gerät hierfür**

(30) Priorität: 15.02.2000 CH 2952000
(71) Anmelder: Coufal Elektronik AG, 9427 Wolfhalden (CH)
(72) Erfinder: Coufal, Hanspeter, 9427 Wolfhalden (CH)
(74) Vertreter: Römpler, Aldo

(57) **Zusammenfassung**

Aus den von einer Wasserleitung (4) aufgenommenen elektrischen Signalen bzw. eine Frequenz ergebenden Schwingungen wird in einem Generator bzw. einem Übertragungssystem (9) eine elektrische Nosode erstellt, welche der Wasserleitung (4) und damit dem in dieser geführten Wasser zugeführt wird. Die Signalaufnahme erfolgt vorzugsweise mittels einer ersten Spule (5); die Abgabe mittels einer in Fliessrichtung des Wassers mit Abstand angeordneten zweiten Spule (6). Störungen können mittels eines elektrischen Filters ausgefiltert werden. Die Ein- und Ausgangssignale können über Verstärker (8, 10) laufen. Über einen Eingang (11) oder einem als Frequenzspeicher ausgebildeten Bauteil (12) können zusätzliche Signale eingespiesen werden. Durch die sich aus dieser Anordnung ergebenden Auslöschungseffekte werden aus schädlichen Stoffen stammende, unerwünschte Schwingungen aufgehoben und die Bekömmlichkeit des Wassers verbessert.

## Beschreibung

Die vorliegende Erfindung betrifft ein Verfahren zur Behandlung von Leitungswasser sowie ein Gerät hierfür.

Es sind zahlreiche Geräte zur elektrischen bzw. elektromagnetischen Behandlung von Leitungswasser bekannt. Diese sind entweder in der Nähe einer Wasserleitung aufzustellen oder mittels Drahtspulen direkt an diese anzuschliessen. Derartige Geräte weisen einen Signal- bzw. Frequenz-Generator auf, wobei ein elektromagnetisches Feld von beispielsweise 600 bis 8'000 Hz generiert wird. Der Zweck liegt darin, unerwünschte Ablagerungen, insbesondere Kalkablagerungen, in der Wasserleitung zu verhindern. Dies ohne die Zuhilfenahme schädlicher Chemikalien, sondern alleine durch elektromagnetische Beeinflussung. Diese Geräte haben in der Praxis ihre Wirksamkeit bewiesen. Tatsächlich werden nicht zur neue Ablagerungen verhindert, sondern darüber hinaus auch alte Ablagerungen sukzessive abgebaut. Sie werden daher zunehmend sowohl von Installateuren als auch von Umweltschutz-Fachstellen empfohlen. Was bisher jedoch noch nicht gelungen ist, ist mit ähnlich konzipierten Systemen weitere Schadstoffe in ihrer Wirkung zu neutralisieren, bzw. das Leitungswasser für Mensch und Tier bekömmlicher zu machen.

Die vorliegende Erfindung stellt sich daher die Aufgabe, ein Verfahren sowie ein Gerät zur Behandlung von Leitungswasser zu schaffen, die geeignet sind, das Wasser so zu beeinflussen, dass die Wirkung von Schadstoffen auf den menschlichen oder tierischen Körper verringert oder gar aufgehoben wird.

Das erfindungsgemässe Verfahren entspricht den kennzeichnenden Merkmalen des Patentanspruchs 1. Das Gerät geht aus Patentanspruch 4 hervor. Weitere vorteilhafte Ausbildungen sind den abhängigen Patentansprüchen zu entnehmen.

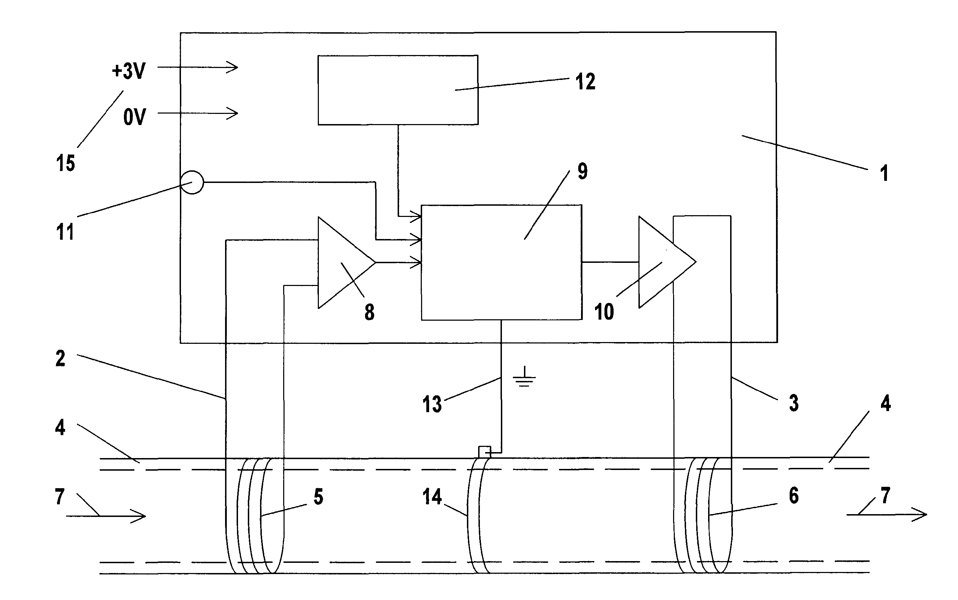

Nachfolgend wird ein bevorzugtes Ausführungsbeispiel des Erfindungsgegenstandes anhand der Zeichnung näher beschrieben.

Das Gerät zur Behandlung von Leitungswasser weist eine in einem Gehäuse 1 untergebrachte elektronische Anordnung auf, die über elektrische Leitungen 2 und 3 und entsprechende Kontakte mit einer Wasserleitung 4 zu verbinden ist. Im vorliegenden Fall sind diese beiden elektrischen Leitungen 2 und 3 jeweils mit einer um die Wasserleitung 4 zu wickelnden Spulen 5 und 6 versehen. Die Fliessrichtung des Wassers verläuft in dieser Zeichnung von links nach rechts, entsprechend dem Pfeil 7. Über die elektrische Leitung 2 ist die in Fliessrichtung 7 erste Spule 5 über einen ersten, als Vor- oder Aufnahmeverstärker dienenden Verstärker 8 mit einem Generator oder Übertragungssystem 9 verbunden. Von hier aus geht es über einen zweiten, als Leistungs- oder Wiedergabeverstärker dienenden Verstärker 10 und die elektrische Leitung 3 sowie die zweite Spule 6 zurück zur Wasserleitung 4. Ferner ist im vorliegenden Beispiel noch ein mit dem Generator oder Übertragungssystem 9 verbundener Eingang 11 vorgesehen, sowie ein elektronisches Bauteil 12. Der Generator oder das Übertragungssystem 9 ist hier zudem mittels einer Erd-Leitung 13 und einer Erdungsbride 14 mit der Wasserleitung 4 verbunden. Die Erdungsbride 14 ist zwischen den beiden Spulen 5 und 6 an die Wasserleitung 4 angeschlossen. Die Stromspeisung 15 kann durch eine Batterie oder einen Netzadapter erfolgen.

Mittels dieses Gerätes kann das Leitungswasser wie folgt behandelt werden: Die erste Spule 5 nimmt die Schwingungen aus der Wasserleitung 4, bzw. aus dem darin fliessenden Wasser auf und gibt sie über die elektrische Leitung 2 dem Vor- oder Aufnahmeverstärker dienenden Verstärker 8 weiter. Die verstärkten Signale werden an den Generator bzw. das Übertragungssystem 9 abgegeben. Hier können elektrische Störungen, die z.B. von elektrischen Geräten im Haushalt stammen, mittels eines elektrischen Filters ausgefiltert werden. Über den als Leistungs- oder Wiedergabeverstärker dienenden Verstärker 10 und die elektrische Leitung 3 sowie die zweite Spule 6 wird das elektrische Signal wieder an die Wasserleitung 4, also an das Trinkwasser abgegeben. Im Prinzip wird im Generator bzw. Übertragungssystem 9 aus den von der ersten Spule 5 aufgenommenen elektrischen Informationen bzw. Frequenzen eine Nosode elektrisch erstellt und durch die zweite Spule 6 wieder dem Wasser zugeführt.

Nosode ist ein bekannter und anerkannter Begriff, der u.a. in der Homöopathie verwendet wird. Damit wird die Rückgabe der von einem Organismus aufgenommenen schädlichen Faktoren an diesen Organismus bezeichnet, wodurch die gesundheitsschädlichen Wirkungen aufheben lassen. Im vorliegenden Fall wird davon ausgegangen, dass das Wasser sowie die in diesem mitgeführten Stoffe ein eigenes, wenn gewöhnlich auch sehr schwaches Energiefeld aufweisen. Insbesondere ein elektromagnetisches Feld, das den biochemischen Vorgängen übergeordnet ist. Die im Wasser vorhandenen Stoffe bewirken demnach eine elektrische bzw. elektromagnetische Veränderung. Derartige Veränderungen werden auch als Störschwingungen bezeichnet. Durch das vorliegende Gerät zur Behandlung von Leitungswasser werden diese Störschwingungen, bzw. die störenden Frequenzmuster, mittels der ersten Spule 5 abgegriffen. Die gefilterten und verstärkten elektrischen bzw. elektromagnetischen Signale werden über die zweite Spule 6 wieder dem Leitungswasser und den darin enthaltenen Stoffen zurückgegeben. Durch die sich ergebenden Auslöschungseffekte werden unerwünschte Schwingungen aufgehoben oder erwünschte Schwingungen angeregt bzw. verstärkt.

Diese Signale können normal oder invertiert wieder dem Wasser zugeführt werden. Vorzugsweise werden die Signale umgekehrt, gegenpolig abgegeben. Eine Aufdoppelung bzw. Rückkopplung der Signale muss vermieden werden. Dazu dient insbesondere auch die vorgeschlagene Anordnung der beiden Spulen 5 und 6. Der Abstand zwischen den Spulen 5 und 6 sollte mindestens 10 cm betragen. Im vorliegenden Beispiel ist zwischen den beiden Spulen 5 und 6 die Erd-Leitung 13 bzw. die Erdungsbride 14 an die Wasserleitung 4 angeschlossen. Diese Geräte- bzw. Spulenanordnung arbeitet auf induktivem Weg.

Es ist indessen auch möglich kapazitiv zu arbeiten. Hierzu müsste mindestens die erste Spule 5 durch einen mit der Wasserleitung 4 zu verbindenden flächigen Kontakt ersetzt werden. Vorzugsweise wäre hierzu eine an oder um das Rohr zu legende, elektrisch leitende Folie zu verwenden.

Es ist zudem möglich, über den mit dem Generator oder Übertragungssystem 9 verbundenen Eingang 11 zusätzliche, sich auf das Leitungswasser günstig auswirkende Signale einzuspeisen. Der Eingang 11 ermöglicht es dabei, entweder nach den örtlich unterschiedlichen Faktoren oder nach den Wünschen und Bedürfnissen der Hausbewohner die für eine beabsichtigte Wirkung erforderlichen Frequenzen bzw. Frequenzspektren einzuspeisen. Ähnliches kann über das eingangs erwähnte, zusätzliche elektronische Bauteil 12 erfolgen, das für diesen Zweck als Frequenzspeicher auszubilden ist. Diese ebenfalls über die zweite Spule 6 an die Wasserleitung 4 abzugebenden Signale sind dann fest in das Gerät eingebaut und können daher später weniger leicht geändert werden.

Bei Testversuchen wurde ermittelt, dass durch das erfindungsgemässe Gerät eine merkbare positive Beeinflussung des Leitungswassers erfolgt.

Es liegt im Rahmen der Erfindung, das Gerät auch anders als in der vorliegenden Zeichnung aufzubauen.

## Patentansprüche

1. Verfahren zur Behandlung von Leitungswasser, **dadurch gekennzeichnet, dass** aus den von einer Wasserleitung (4) aufgenommenen elektrischen Signalen eine elektrische Nosode erstellt wird, welche ebenfalls in Form eines elektrisches Signals wieder der Wasserleitung (4) und damit dem in dieser geführten Wasser zugeführt wird.

2. Verfahren nach Anspruch 1, **dadurch gekennzeichnet, dass** eine erste Stelle an der Wasserleitung (4), an der die elektrischen Signale aufgenommen werden und eine in Fliessrichtung (7) nach der ersten Stelle liegenden zweite Stelle, an der die elektrischen Signale wieder an die Wasserleitung (4) abgegeben werden, räumlich voneinander getrennt sind, z.B. einen Abstand von mindestens 10 cm voneinander aufweisen.

3. Verfahren nach Anspruch 2, **dadurch gekennzeichnet, dass** eine Erdung (13, 14) vorgesehen ist, wobei deren Anschluss an die Wasserleitung (4) zwischen den beiden Kontakten der elektrischen Signalaufnahme- und Signalabgabe-Leitungen (2 und 3) erfolgt.

4. Gerät zur Behandlung von Leitungswasser, **gekennzeichnet durch** eine elektrische oder elektronische Anordnung, die mit einer Wasserleitung (4) zu verbinden oder an dieser anzuordnen ist, wobei ein Generator oder Übertragungssystem (9) vorgesehen ist, um aus den von der Wasserleitung (4) aufgenommenen elektrischen Signalen eine elektrische Nosode zu erstellen, welche ebenfalls in Form eines elektrisches Signals wieder der Wasserleitung (4) und damit dem in dieser geführten Wasser zuführbar ist.

5. Gerät nach Anspruch 4, **gekennzeichnet durch** erste elektrische Leitung (2), die mittels eines Kontakts mit einer Wasserleitung (4) zu verbinden ist, welche erste Leitung mit dem Generator oder Übertragungssystem (9) verbunden ist wobei von diesem eine zweite elektrische Leitung (3) abgeht, die über einen weiteren Kontakt wieder an die Wasserleitung (4) anschliessbar ist.

6. Gerät nach Anspruch 5, **dadurch gekennzeichnet, dass** eines oder beide, je an den beiden elektrischen Leitungen (2, 3) angeordneten oder ausgebildeten Kontakte entweder aus einer um die Wasserleitung (4) zu wickelnden Spule (5, 6) oder aus einer an oder um die Wasserleitung (4) zu legenden, elektrisch leitenden Fläche bestehen, beispielsweise einer Folie, wobei entweder auf induktivem oder kapazitivem Weg gearbeitet wird.

7. Gerät nach einem der Ansprüche 4 bis 6, **dadurch gekennzeichnet, dass** der Generator oder das Übertragungssystem (9) mindestens einen elektrischen Filter aufweist, mit dem Zweck elektrische Störungen, z.B. solche aus elektrischen Geräten im Haushalt, auszufiltern.

8. Gerät nach einem der Ansprüche 4 bis 7, **gekennzeichnet durch** mindestens einen elektrischer Verstärker (8, 10), um die ein- und/oder abgehenden elektrischen Signale zu verstärken.

9. Gerät nach Anspruch 8, **gekennzeichnet durch** einen ersten, als Voroder Aufnahmeverstärker dienenden Verstärker (8) und einen zweiten, als Leistungs- oder Wiedergabeverstärker dienenden Verstärker (10).

10. Gerät nach einem der Ansprüche 4 bis 9, **gekennzeichnet durch** einen Eingang (11), zum Einspeisen von zusätzlichen elektrischen Signalen bzw. Frequenzen, derart dass diese den an die Wasserleitung (4) abgehenden Signalen mitgegeben werden können.

11. Gerät nach einem der Ansprüche 4 bis 10, **gekennzeichnet durch** ein als Frequenzspeicher ausgebildetes Bauteil (12), zum Einspeisen von zusätzlichen, vorgegebenen Signalen, derart dass diese den an die Wasserleitung (4) abgehenden Signalen mitgegeben werden können.
